Europäisches Patentamt

European Patent Office

Office européen des brevets

(11) Veröffentlichungsnummer: **0 302 320 B1**

## (12) EUROPÄISCHE PATENTSCHRIFT

(45) Veröffentlichungstag der Patentschrift: **16.09.92**

(51) Int. Cl.⁵: **B60C 23/12**

(21) Anmeldenummer: **88111812.9**

(22) Anmeldetag: **22.07.88**

(54) Vorrichtung zum Aufpumpen von Reifen an Fahrzeugen, insbesondere an Fahrrädern.

(30) Priorität: **03.08.87 DE 8710604 U**

(43) Veröffentlichungstag der Anmeldung:
**08.02.89 Patentblatt 89/06**

(45) Bekanntmachung des Hinweises auf die
Patenterteilung:
**16.09.92 Patentblatt 92/38**

(84) Benannte Vertragsstaaten:
**AT BE DE ES FR GB IT LU NL SE**

(56) Entgegenhaltungen:
**DE-C- 524 064**
**FR-A- 593 841**
**GB-A- 2 506**
**GB-A- 587 861**
**US-A- 1 707 508**

(73) Patentinhaber: **Linke, Konrad**
**Westerburgstrasse 9**
**W-4047 Dormagen 5(DE)**

(72) Erfinder: **Linke, Konrad**
**Westerburgstrasse 9**
**W-4047 Dormagen 5(DE)**

(74) Vertreter: **Paul, Dieter-Alfred, Dipl.-Ing.**
**Fichtestrasse 18**
**W-4040 Neuss 1(DE)**

Rank Xerox (UK) Business Services

**Beschreibung**

Die Erfindung betrifft eine Vorrichtung zum Aufpumpen von Reifen an Fahrzeugen, insbesondere an Fahrrädern, mit folgenden Merkmalen:

a) die Vorrichtung weist eine zur Felge ortsfeste Luftpumpe mit einem Pumpengehäuse und einem verschieblich geführten Pumpenkolben auf;

b) der Pumpenkolben läuft auf einer am Fahrzeug ortsfest angeordneten Führungsbahn;

c) die Führungsbahn hat einen sich in radialer Richtung ändernden Abstand zur Felge;

d) der Pumpenkolben ist in Richtung auf die Führungsbahn federbeaufschlagt;

e) die Luftpumpe weist ein in Kolbenbewegunsrichtung verschieblich gelagertes Steuerventil auf;

f) das Steuerelement ist gegen die Wirkung einer Feder vom Reifenluftdruck beaufschlagt;

g) Pumpenkolben und Pumpengehäuse weisen Rastmittel zum gegenseitigen Einrasten in einwärts gedrückter Totpunktstellung des Pumpenkolbens auf;

h) das Steuerelement ist derart ausgebildet und den Rastmitteln derart zugeordnet, daß ein Einrasten der Rastmittel unterhalb eines bestimmten Luftdruckes im Reifen verhindert ist.

Eine solche Vorrichtung ist in der GB-A-2506 A.D.1909 beschrieben. Die Vorrichtung weist ein Pumpengehäuse auf, in dem ein Pumpenkolben verschieblich gelagert ist. Er hat eine nach außen gehende Kolbenstange, deren freies Ende mit einer Rolle versehen ist. Die Rolle läuft auf einer an der Fahrradgabel montierten Führungsbahn, deren radialer Abstand zur Felge sich nach dem Auflaufen der Rolle verringert, so daß der Pumpenkolben in das Pumpengehäuse gegen die Wirkung einer darin angeordneten Feder hineingedrückt wird. Hierdurch wird Luft über einen Verbindungsschlauch und ein Ventil in den Schlauch des Reifens eingepumpt.

Zu der Luftpumpe gehört ein in dem Pumpengehäuse angeordnetes Steuerelement, das einerseits vom Reifenluftdruck und andererseits von einer Feder beaufschlagt ist. Es nimmt deshalb eine dem jeweiligen Luftdruck entsprechende Stellung in Axialrichtung des Pumpenkolbens ein. Das Steuerelement steht über eine Kinematik mit einem Raststift in Verbindung, der in eine zum Pumpenkolben gehende Bohrung des Pumpengehäuses eingreift. Sobald der Reifenluftdruck einen bestimmten Wert überschreitet, wird der Raststift gegen die Wandung des Pumpenkolbens gedrückt und greift in eine Ausnehmung des Pumpenkolbens ein, sobald sich dieser in seiner eingedrückten Stellung befindet. Dadurch wird eine weitere Bewegung des Pumpenkolbens blockiert, d.h. er bleibt in der einwärts gedrückten Stellung hängen und es wird keine weitere Luft in den Reifen gepumpt. Erst wenn der Luftdruck infolge Luftverlust den vorgenannten Wert wieder unterschreitet, verschiebt sich das Steuerelement so weit, daß der Raststift aus der Ausnehmung herausgezogen wird und damit wieder eine Bewegung des Pumpenkolbens möglich ist.

Bei einer aus der DE-C-524 064 bekannten Vorrichtung steht das Steuerelement über eine Kinematik mit einer Steuerstange in Verbindung, die den Pumpenkolben durchdringt und an deren Ende in der Kolbenstange gelagerte Querstifte anliegen. In diesem Bereich hat die Steuerstange Ausnehmungen. Sobald der Reifenluftdruck einen bestimmten Wert überschreitet, stehen die Ausnehmungen aufgrund der Verschiebung der Steuerstange in axialer Richtung den Querstiften gegenüber, so daß diese in die Ausnehmungen einfassen. Damit gelangen sie außerhalb des Einflußbereichs der Führungsbahn, laufen also nicht mehr auf diese auf. Damit ist die Bewegung des Pumpenkolben unterbunden, bis der Luftdruck in Folge Luftverlusts den vorgenannten Wert wieder unterschreitet und die Steuerstange sich wieder so weit verschiebt, daß die Querstifte auseinander gedrückt werden und damit wieder auf die Führungsbahn auflaufen.

Mit diesen Vorrichtungen wird zwar der Pumpvorgang automatisch unterbrochen, wenn im Reifen ein bestimmter Luftdruck erreicht ist. Dies wird jedoch mit relativ komplizierten Konstruktionen erkauft. Diese sind zum einen relativ schwer und sorgten auf Grund ihres Gewichtes für hohe Unwuchten, die nicht ausgeglichen werden können. Zum anderen erfordern die Konstruktionen, insbesondere die Kinematiken zur Betätigung der Raststifte, viel Platz und sind wegen ihrer Anzahl von beweglichen Teilen anfällig.

Der Erfindung liegt deshalb die Aufgabe zugrunde, eine Vorrichtung der eingangs genannten Art so zu gestalten, daß sie klein, leicht und einfach ausgebildet werden kann.

Diese Aufgabe wird erfindunsgemäß durch folgende Merkmale gelöst, in denen sich die Vorrichtung gegenüber dem Stand der Technik unterscheidet:

i) die Luftpumpe ist dem Ventil des Reifens zugeordnet;

j) das Pumpengehäude ist mit der Felge verbunden;

k) das Steuerelement weist zumindest im Bereich des bzw. der am Pumpengehäuse befindlichen Rastmittel(s) Führungsflächen für das bzw. die am Pumpenkolben befindlichen Rastmittel auf;

l) die Führungsflächen verlaufen derart in Kolbenbewegungsrichtung, daß sie oberhalb des bestimmten Luftdrucks im Reifen ein Einrasten der Rastmittel bewirken.

Erfindungsgemäß ist also die Luftpumpe direkt dem Ventil zugeordnet, das einen Bestandteil des Steuerelements darstellt. Damit wird ein ohnehin bei Fahrrädern vorhandenes Bauteil in die Funktion der Luftpumpe einbezogen, wodurch eine leichte und kompakte Konstruktion ermöglicht wird. Das Pumpengehäuse ist direkt mit der Felge verbunden, so daß auf eine zusätzliche Befestigungsvorrichtung verzichtet werden kann. Die am Pumpenkolben befindlichen Rastmittel sind an Führungsflächen geführt, die am Steuerelement vorgesehen sind und derart in Kolbenbewegungsrichtung verlaufen, daß sie oberhalb eines bestimmten Luftdrucks im Reifen ein Einrasten der Rastmittel bewirken. Das Steuerelement bietet also Führungsflächen für die am Pumpenkolben befindlichen Rastmittel an, die diese Rastmittel bei einer Stellung des Steuerelements zum Einrasten mit dem am Pumpengehäuse befindlichen Rastmitteln veranlassen, wenn das Steuerelement eine Lage einnimmt, die einem Luftdruck entspricht, der oberhalb eines bestimmten, vorher ausgelegten Wertes liegt. Eine aufwendige Kinematik zur Betätigung der Rastmittel ist nicht vorhanden.

Dabei ist es zweckmäßig, wenn die Führungsflächen in Richtung der Kolbenbewegung verlaufen und im Bereich des bzw. der am Pumpengehäuse befindlichen Rastmittel radial nach außen vorspringen. Durch diese Ausgestaltung der Führungsflächen werden die am Pumpenkolben befindlichen Rastmittel bei der Aufwärtsbewegung des Pumpenkolbens nach außen gespreizt, sofern der Reifendruck so hoch ist, daß das Steuerelement weit genug in Richtung auf den Pumpenkolben verschoben ist.

Das Steuerelement ist zweckmäßigerweise als Ventilaufsatz ausgebildet, was sogar die Möglichkeit eröffnet, ein normales Ventil zu verwenden, auf dem die Vorrichtung aufgeschraubt wird. In diesem Fall ist es erforderlich, daß Ventil und Ventilaufsatz gemeinsam in Kolbenbewegungsrichtung beweglich sind. Dies kann so geschehen, daß das Ventil in der Reifenfelge beweglich gelagert ist und dort eine sich an der Reifenfelge abstützende Feder angeordet ist.

In weiterer Ausgestaltung der Erfindung ist vorgesehen, daß der Pumpenkolben innerhalb des Pumpengehäuses gelagert ist, das Steuerelement dort abdichtend umschließt und das Steuerelement eine zum Ventil gehende Bohrung aufweist. Auf Grund dieser Ausgestaltung ergibt sich eine besonders kompakte Konstruktion.

Nach der Erfindung ist ferner vorgeschlagen, daß die Rastmittel am Pumpenkolben als zumindest ein Raststift und am Pumpengehäude als zumindest eine mit dem Raststift korrespondierende Ausnehmung ausgebildet sind. Dabei sollten der bzw. die Raststift(e) quer zur Bewegungsachse des Pumpenkolbens verschieblich gelagert sein.

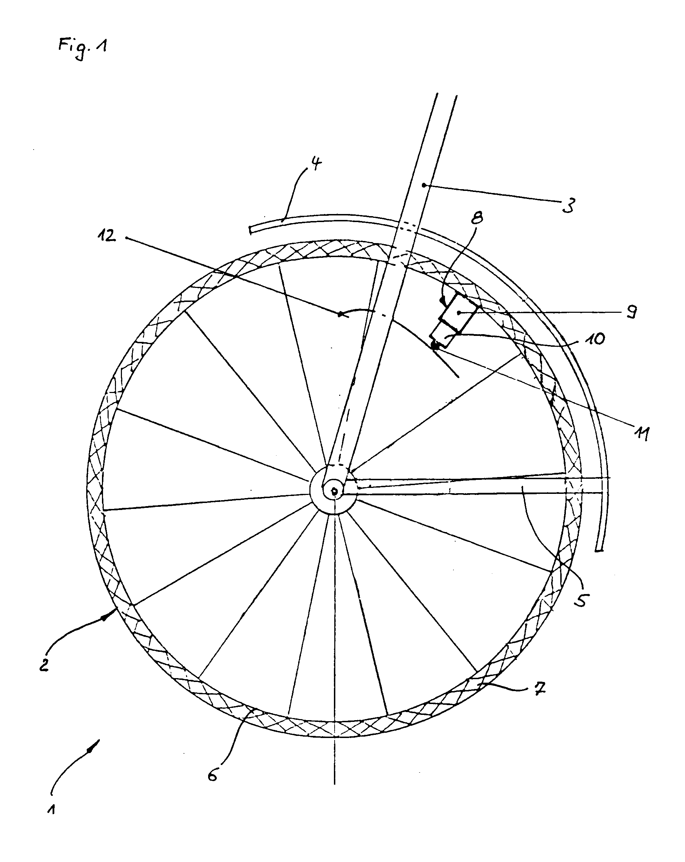

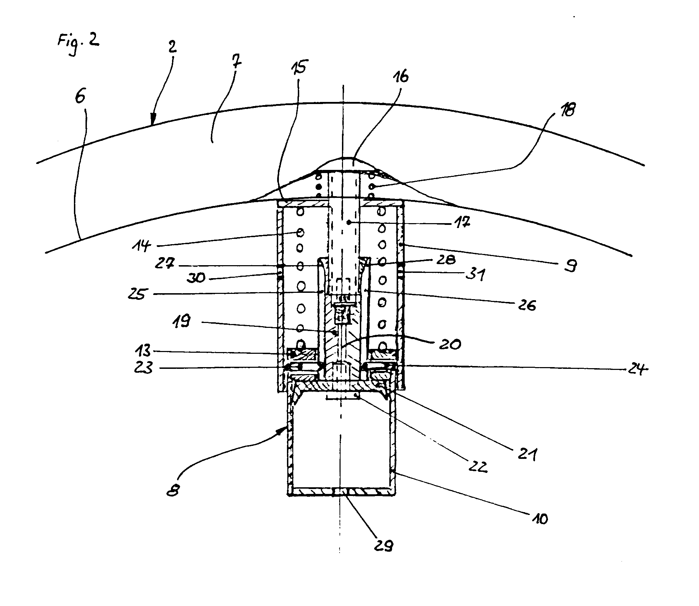

In der Zeichnung ist die Erfindung an Hand eines Ausführungsbeispiels näher veranschaulicht. Es zeigen:

Figur (1)     die Seitenansicht des Vorderrades eines Fahrrads und

Figur (2)     einen Vertikalschnitt durch ein Ventil mit Luftpumpe des Fahrrads gemäß Figur (1).

Bei dem in Figur (1) dargestellten Fahrrad (1) ist nur der Bereich des Vorderrades (2) zu sehen. Es ist in einer Lenkgabel (3) gelagert und durch ein Schutzblech (4) teilweise abgedeckt. Das Schutzblech (4) wird an der Lenkgabel (3) direkt und über Streben (5) befestigt.

Das Vorderrad (2) besteht in üblicher Weise aus einer Felge (6) und einem mit Luft aufpumpbaren Reifen (7). Es ist ein mit einer Luftpumpe (8) versehenes Ventil vorgesehen. Die Luftpumpe (8) besteht aus einem an der Felge (6) befestigten Pumpengehäuse (9) und einem in diesem in radialer Richtung des Vorderrades (2) beweglich geführten Pumpenkolben (10). Am freien Ende des Pumpenkolbens (10) ist eine Rolle (11) angebracht, die in der gezeigten Stellung auf einer Führungsschiene (12) sitzt. Diese Führungsschiene (12) ist an der Lenkgabel (3) ortsfest angebracht und hat einen gekrümmten Verlauf. Die Krümmung ist so beschaffen, daß sich der radiale Abstand zur Felge (6) ständig ändert, so daß der Pumpenkolben (10), wenn er auf die Führungsschiene (12) aufläuft, eine Hubbewegung ausführt. Auf Grund der in Figur (2) näher dargestellten Ausbildung der Luftpumpe (8) wird hierdurch Luft in den Reifen (7) gepumpt.

Der in Figur (2) gezeigte vergrößerte Ausschnitt läßt die Konstruktion der Luftpumpe (8) erkennen. Der Pumpenkolben (10) befindet sich hier in der ausgefahrenen Totpunktstellung. Er ist hohl ausgebildet und weist auf der innenseitigen Stirnfläche einen Führungsring (13) auf. An dessen Innenseite liegt eine als Schraubenfeder ausgebildete Druckfeder (14) an, die sich am Boden (15) des Pumpengehäuses (9) abstützt. Die Druckfeder (14) ist bestrebt, den Pumpenkolben (10) nach außen zu drücken.

Innerhalb des Reifens (7) ist ein Schlauch (16) angeordnet, der mit einem Ventil (17) versehen ist, das in den Innenraum des Pumpengehäuses (9) hineinragt. Zwischen Innenseite der Felge (6) und dem Schlauch (16) ist eine gleichfalls als Schraubenfeder ausgebildete Druckfeder (18) angeordnet. Sie ist bestrebt, das Ventil (17) zur Felge (6) hin, also aus dem Pumpengehäuse (9), heraus, zu ziehen.

Auf das Ventil (17) ist ein Ventilaufsatz (19) aufgeschraubt. Dieser Ventilaufsatz (19) hat Zylinderform und weist innenseitig einen Durchgangskanal (20) auf, der mit dem Ventil (17) in Verbindung steht. Er ragt in das Innere des Pumpenkolbens (10) hinein. An seinem dortigen Ende ist eine Membran (21) mittels einer Düsenschraube (22) befestigt. Sie ist an ihrem Außenumfang derart mit einer Dichtlippe ausgestattet, daß sie beim Einwärtshub des Pumpenkolbens (10) abdichtet und so die in ihm befindliche Luft über den Durchgangskanal (20) und das Ventil (17) in den Reifen (7) gepumpt wird, andererseits aber beim Auswärtshub Luft am Umfang der Membran (21) vorbeistreichen und damit in den Pumpenkolben (10) gelangen kann.

In dem Führungsring (13) sind zwei Raststifte (23, 24) längsverschieblich gelagert, und zwar in Bezug auf die Kolbenbewegungsrichtung radial nach außen gerichtet. Mit ihren innenseitigen Enden laufen sie in Führungsnuten (25, 26), die in den Ventilaufsatz (19) eingeformt sind.

Die Führungsnuten (25, 26) verlaufen zunächst parallel zur Längsachse der Luftpumpe (8). Im oberen Bereich des Ventilaufsatzes (19) laufen die Führungsnuten (25, 26) in jeweils nach außen gerichteten Bögen (27, 28) aus.

Der Pumpenkolben (10) weist untenseitig eine Öffnung (29) auf. In diese Öffnung (29) ist die in Figur (1) dargestellte Rolle (11) abdichtend eingeschraubt.

Die gezeigte Luftpumpe (8) arbeitet im Betrieb wie folgt.

Wird der Pumpenkolben (10) - sei es von Hand oder durch Auflaufen auf die Führungsschiene (12) - in das Pumpengehäuse (9) hineingedrückt, so gleitet damit auch der Führungsring (13) zusammen mit den darin verschieblich gelagerten Raststiften (23, 24) nach oben. Es wird dann die im Pumpenkolben (10) befindliche Luft über den Durchgangskanal (20) und das Ventil (17) in den Reifen (7) gedrückt. Ist der Luftdruck im Reifen (7) ausreichend, d. h. oberhalb eines bestimmten Auslegungswertes, so drückt der Schlauch (16) das Ventil (17) und Ventilaufsatz (19) in eine solche Stellung, daß die Bögen (27, 28) gegenüber von Rastöffnungen (30, 31) im Pumpengehäuse (9) liegen. Bei der Aufwärtsbewegung des Pumpenkolbens (10) werden deshalb die Raststifte (23, 24) im Bereich dieser Rastöffnungen (30, 31) auf Grund der nach außen gerichteten Bögen (27, 28) ebenfalls nach außen gedrückt und fassen in die Rastöffnungen (30, 31) ein. Da der Führungsring (13) mit dem Pumpenkolben (10) fest verbunden ist, ist dann letzterer blockiert, d. h. er bleibt in der einwärts gedrückten Stellung hängen. Er ist dann von der Führungsschiene (12) abgehoben, was zur Folge hat, daß der Reifen (7) nicht weiter aufgepumpt wird.

Verringert sich der Luftdruck im Schlauch (16) auf Grund von Luftverlusten, werden das Ventil (17) und damit der Ventilaufsatz (19) auf Grund der Wirkung der Druckfeder (18) ein entsprechendes Stück aus dem Pumpengehäuse (9) heraus- und in den Reifen (7) hineingezogen. Dadurch kommen die Bögen (27, 28) der Führungsnuten (25, 26) oberhalb der Rastöffnungen (30, 31) zu liegen. Die Raststifte (23, 24) können sich dann wieder nach innen aus den Rastöffnungen (30, 31) bewegen, wobei diese Bewegung durch hier nicht näher dargestellte Federn unterstützt werden kann. Damit ist der Pumpenkolben (10) freigegeben, d. h. er wird durch die Druckfeder (14) nach unten bewegt, wobei sein Innenraum Luft aufnimmt. Auf Grund der Umdrehung des Vorderrades (2) wird er dann auf die Führungsschiene (12) auflaufen und dabei eine Hubbewegung ausführen, die zu einem Aufpumpen des Reifens (7) bzw. des Schlauchs (16) führt. Die Pumpbewegung wird sich solange fortsetzen, bis der Druck im Schlauch (16) wieder so hoch ist, daß das Ventil (17) mit dem Ventilaufsatz (19) wieder so weit in das Pumpengehäuse (9) eingefahren ist, daß die Bögen (27, 28) gegenüber den Rastöffnungen (30, 31) liegen. Bei der nächsten Hubbewegung des Pumpenkolbens (10) werden dann die Raststifte (23, 24) wieder nach außen bewegt, so daß sie in die Rastöffnungen (30, 31) einfahren und die weitere Bewegung des Pumpenkolbens (10) blockiert ist. Auf Grund dieser Funktion ist gesichert, daß die Luftpumpe (8) nur dann Luft in den Schlauch (16) fördert, wenn der Luftdruck im Schlauch (16) unterhalb eines bestimmten Auslegungswertes sinkt.

**Patentansprüche**

1. Vorrichtung zum Aufpumpen von Reifen an Fahrzeugen, insbesondere an Fahrrädern, mit folgenden Merkmalen:

   a) die Vorrichtung weist eine zur Felge (6) ortsfesten Luftpumpe (8) mit einem Pumpengehäuse (9) und einem verschieblich geführten Pumpenkolben (10) auf;

   b) der Pumpenkolben (10) läuft auf einer am Fahrzeug (1) ortsfest angeordneten Führungsbahn (12);

   c) die Führungsbahn (12) hat einen sich in radialer Richtung ändernden Abstand zur Felge (6);

   d) der Pumpenkolben (12) ist in Richtung auf die Führungsbahn (12) federbeaufschlagt;

   e) die Luftpumpe (8) weist ein in Kolbenbewegungsrichtung verschieblich gelagertes Steuerelement (17, 19) auf;

   f) das Steuerelement (17, 19) ist gegen die Wirkung einer Feder (18) vom Reifenluftdruck beaufschlagt;

   g) Pumpenkolben (10) und Pumpengehäuse (9) weisen Rastmittel (23, 24; 30, 31) zum gegenseitigen Einrasten in einwärts gedrückter Totpunktstellung des Pumpenkolbens (10) auf;

h) das Steuerelement (17, 19) ist derart ausgebildet und den Rastmitteln (23, 24; 30, 31) derart zugeordnet, daß ein Einrasten der Rastmittel (23, 24; 30, 31) unterhalb eines bestimmten Luftdruckes im Reifen verhindert ist;

gekennzeichnet durch folgende Merkmale:

i) die Luftpumpe (8) ist dem Ventil (17) des Reifens (7) zugeordnet;

j) das Pumpengehäuse (9) ist mit der Felge (6) verbunden;

k) das Steuerelement (17, 19) weist zumindest im Bereich des bzw. der am Pumpengehäuse (9) befindlichen Rastmittel(s) Führungsflächen (25, 26, 27, 28) für das bzw. die am Pumpenkolben (10) befindlichen Rastmittel (30, 31) auf;

l) die Führungsflächen (25, 26, 27, 28) verlaufen derat in Kolbenbewegungsrichtung, daß sie oberhalb des bestimmten Luftdrucks im Reifen (2) ein Einrasten der Rastmittel (23, 24, 25, 26) bewirken.

2. Vorrichtung nach Anspruch 1,
dadurch gekennzeichnet, daß die Führungsflächen (25, 26, 27, 28) im Bereich des bzw. der am Pumpengehäuse (9) befindlichen Rastmittel (30, 31) radial nach außen aufspringen.

3. Vorrichtung nach Anspruch 1 oder 2,
dadurch gekennzeichnet, daß das Steuerelement als Ventilaufsatz (19) ausgebildet ist.

4. Vorrichtung nach Anspruch 2,
dadurch gekennzeichnet, daß Ventil und Ventilaufsatz (19) miteinander verschraubt sind und gemeinsam in Kolbenbewegungsrichtung beweglich sind.

5. Vorrichtung nach Anspruch 4,
dadurch gekennzeichnet, daß das Ventil (17) in der Reifenfelge (6) beweglich gelagert ist und dort eine sich an der Reifenfelge (6) abstützende Feder (18) angeordnet ist.

6. Vorrichtung nach einem der Ansprüche 1 bis 5,
dadurch gekennzeichnet, daß der Pumpenkolben (10) innerhalb des Pumpengehäuses (9) gelagert ist, das Steuerlement (19) dort abdichtend umschließt und das Steuerelement (19) eine zum Ventil (17) gehende Bohrung aufweist.

7. Vorrichtung nach einem der Ansprüche 1 bis 6,
dadurch gekennzeichnet, daß das bzw. die am Pumpenkolben (10) befindlichen Rastmittel als zumindest ein Raststift (23, 24) und am Pumpengehäuse (9) als zumindest mit dem Raststift (23, 24) korrespondierende Ausnehmung (30, 31) ausgebildet sind.

8. Vorrichtung nach Anspruch 7,
dadurch gekennzeichnet, daß der bzw. die Rastsitft(e) quer zur Bewegungsachse des Pumpenkolbens (10) verschieblich gelagert ist bzw. sind.

**Claims**

1. Inflating device for tyres on vehicles, particularly bicycles, having the following features:

a) the device has an air pump (8) which is fixed in position relative to the wheel rim (6) and comprises a pump casing (9) and a slidably guided pump piston (10);

b) the pump piston (10) runs on a guide path (12) disposed in a fixed position on the vehicle (1);

c) the guide path (12) is disposed at a distance from the wheel rim (6) which varies in the radial direction;

d) the pump piston (12) is spring loaded in the direction of the guide path (12);

e) the air pump (8) has a control member (17, 19) mounted for sliding in the direction of movement of the piston;

f) the control member (17, 19) is loaded by the air pressure of the tyre against the action of a spring (18);

g) the pump piston (10) and pump casing (9) are provided with catch members (23, 24; 30, 31) for mutual catch engagement when the pump piston (10) is in the inwardly pressed dead centre position;

h) the control member (17, 19) is so constructed and associated with the catch members (23, 24; 30, 31) in such a manner that catch engagement of the catch members (23, 24; 30, 31) is prevented below a determined air pressure in the tyre,

characterised by the following features:

i) the air pump (8) is associated with the valve (17) of the tyre (7);

j) the pump casing (9) is connected to-the wheel rim (6);

k) the control member (17, 19) is provided, at least in the region of the catch member or members disposed on the pump casing (9), with guide surfaces (25, 26, 27, 28) for the catch member or members (30, 31) disposed on the pump piston (10);

l) the guide surfaces (25, 26, 27, 28) extend in the direction of movement of the piston in such a manner that above the determined air pressure in the tyre (2) they bring about an engagement of the catch members (23, 24, 25, 26).

2. Device according to Claim 1, characterised in that the guide surfaces (25, 26, 27, 28) open out radially in the region of the catch member or members (30, 31) disposed on the pump casing (9).

3. Device according to Claim 1 or 2, characterised in that the control member is in the form of a valve cap (19).

4. Device according to Claim 2, characterised in that the valve and the valve cap (19) are screwed to one another and are conjointly movable in the direction of movement of the piston.

5. Device according to Claim 4, characterised in that the valve (17) is movably mounted in the tyre rim (6) and that a spring (18) supported on the tyre rim (6) is disposed there.

6. Device according to one of Claims 1 to 5, characterised in that the pump piston (10) is mounted inside the pump casing (9), sealingly encloses the control member (19) there and the control member (19) has a bore extending to the valve (17).

7. Device according to one of Claims 1 to 6, characterised in that the catch member or members disposed on the pump piston (10) is or are in the form of at least one catch pin (23, 24) and the catch member or members disposed on the pump casing (9) is or are in the form of at least one recess (30, 31) corresponding to the catch pin (23, 24).

8. Device according to Claim 7, characterised in that the catch pin or pins is or are mounted for sliding transversely to the axis of movement of the pump piston (10).

**Revendications**

1. Dispositif de gonflage de pneumatiques sur des véhicules, en particulier des bicyclettes, ayant les particularités suivantes:

a) le dispositif comporte une pompe à air (8) stationnaire par rapport à la jante (6), possédant un corps de pompe (9) et un piston de pompe (10) mobile en translation et guidé;

b) le piston de pompe (10) vient en contact et circule sur une glissière de guidage (12) disposée stationnaire sur le véhicule (1);

c) la glissière de guidage (12) présente par rapport à la jante (6) une distance qui change en direction radiale;

d) le piston de pompe (12) est chargé par ressort en direction de la glissière de guidage (12);

e) la pompe à air (8) comporte un élément de commande (17, 19) monté mobile en translation dans la direction de déplacement du piston;

f) l'élément de commande (17, 19) est sollicité par la pression d'air du pneumatique à l'encontre de l'action d'un ressort (18);

g) le piston de pompe (10) et le corps de pompe (9) comportent des moyens d'arrêt (23, 24; 30, 31) destinés à s'encliqueter mutuellement à une position de point mort du piston (10) où celui-ci est repoussé vers l'intérieur;

h) l'élément de commande (17, 19) est réalisé de telle manière et est coordonné de telle manière aux moyens d'arrêt (23, 24; 30, 31) qu'un encliquetage des moyens d'arrêt (23, 24; 30, 31) est empêché audessous d'une pression d'air déterminée dans le pneumatique;

caractérisé en ce que:

i) la pompe à air (8) est coordonnée à la valve (17) du pneumatique (7);

j) le corps de pompe (9) est relié à la jante (6);

k) l'élément de commande (17, 19) présente, tout au moins dans la région du ou des moyens d'arrêt se trouvant sur le corps de pompe (9), des surfaces de guidage (25, 26, 27, 28) pour le ou les moyens d'arrêt (30, 31) se trouvant sur le piston (10) et

l) les surfaces de guidage (25, 26, 27, 28) ont une conformation telle, dans la direction de mouvement du piston, qu'elles produisent l'encliquetage des moyens d'arrêt (23, 24, 25, 26) au-dessus de la pression d'air déterminée du pneumatique (2).

2. Dispositif selon la revendication 1, caractérisé en ce que les surfaces de guidage (25, 26, 27, 28) s'écartent mutuellement, radialement vers l'extérieur, dans la région du ou des moyens d'arrêt (30, 31) se trouvant sur le corps de pompe (9).

3. Dispositif selon la revendication 1 ou 2, caractérisé en ce que l'élément de commande est réalisé comme une pièce rapportée ou rehausse de valve (19).

4. Dispositif selon la revendication 2, caractérisé en ce que la valve et la rehausse de valve (19) sont assemblées entre elles par vissage et sont déplaçables ensemble dans la direction de mouvement du piston.

5. Dispositif selon la revendication 4, caractérisé en ce que la valve (17) est disposée mobile dans la jante (6) sur laquelle est monté le pneumatique et un ressort (18) s'appuie à cet endroit sur la jante (6).

6. Dispositif selon une des revendications 1 à 5, caractérisé en ce que le piston (10) est monté à l'intérieur du corps de pompe (9), où il entoure l'élément de commande (19) en l'étanchant, et l'élément de commande (19) présente un perçage menant à la valve (17).

7. Dispositif selon une des revendications 1 à 6, caractérisé en ce que le ou les moyens d'arrêt se trouvant sur le piston de pompe (10) est ou sont réalisé(s) sous la forme d'au moins une cheville d'arrêt (23, 24) et le ou les moyens d'arrêt se trouvant sur le corps de pompe (8) est ou sont réalisé(s) sous la forme d'au moins un évidement (30, 31) correspondant à la cheville d'arrêt (23, 24).

8. Dispositif selon la revendication 7, caractérisé en ce que le ou les chevilles d'arrêt est ou sont montée(s) mobiles transversalement à l'axe de mouvement du piston de pompe (10).

Fig. 1

Fig. 2